# EUROPEAN PATENT APPLICATION

(11) **EP 1 739 614 A2**
(43) Date of publication of application: **03.01.2007**
(21) Application number: 06013246.1
(22) Date of filing: 27.06.2006
(51) Int. Cl.: G06Q 30/00, G07B 17/00

(54) **Intelligent mail system to coordinate direct mail with other marketing channels using mail prediction and mail control**

(30) Priority: 27.06.2005 US 694304 P; 09.06.2006 US 450533
(71) Applicant: PITNEY BOWES INC., Stamford, CT 06926-0700 (US)
(72) Inventor: Miller, Kenneth G., Bethel Connecticut 06801 (US); Winkelman, John H., Southbury, Connecticut 06488 (US); Rojas, John W., Norwalk, Connecticut 06855 (US); Powers, Cody, Liverpool, New York 13090 (US); Reyes, Carlos, East Haven Connecticut 06512 (US); Norris, James R., Jr., Danbury, Connecticut 06810 (US)
(74) Representative: HOFFMANN EITLE

(57) **Abstract**

Apparatus for enabling a coordinated direct marketing contact strategy between the direct mailing and the other marketing channels. The apparatus selects (block 730) the marketing prospect names that are common between the direct mailing (block 710) and the other marketing channels (block 720) being used in the direct marketing campaign. Then, using mail prediction with the common names between marketing channels the apparatus determines (block 740) the probability of the prospect receiving the mail piece on a certain date or dates. For each common name the apparatus calculates (block 760) the contact date(s) for the other contact channels based on the marketer's contact strategy and the predicted in-home dates. The individual contact strategies may then be aggregated into an overall contact strategy which enables other channels to coordinate with the direct mailing. This process is repeated over several campaigns to benchmark campaign performance that can then be used to analyze and refine future campaign execution.

## Description

This invention relates to mail processing apparatus and methods, as well as computer data processing apparatus for calculating dates and methods of coordinating dates using a computer. The invention is applicable to marketing to a prospective population using more than one marketing channel and more specifically coordinating the marketing channels with some contact strategy.

For further details, reference is directed to copending US Application No. 11/372,809, a copy of which is filed herewith as Appendix 1, and to US 6,549,892 B1 and US 6,738,689 B2 which describe related subject matter.

Direct mail marketers have faced increasing challenges in maintaining response rates to their marketing programs. There are certain variables that have been historically controllable such as the creation of the mailpiece and the offer and incentive produced by the mail piece itself. However, the direct mail marketer has not been able to reasonably measure the sensitivity of marketing success to day of week that the prospect receives the mail piece, nor been able, in any reasonable way to control when the prospect actually receives the mail piece.

Establishing in-home date sensitivity provides the direct mail marketer with a critical new capability ― the ability to understand prospect population behaviour around mail open-ability; that is, there are certain days of the week when direct mail is simply discarded and other days of the week when the prospect population is more likely to open the mail, increasing the propensity of the prospect to act on the offer.

Once in-home date sensitivity is established, the challenge becomes one of controlling the mail stream in such a way that the maximum amount of mail arrives when the prospect is most likely to open and act on the offer. Getting control of the mail stream requires complex calculation in order to determine the appropriate time to induct the mail at each of the approximately 400 different large processing facilities in the USPS network. Direct mail marketers are further constrained by balancing postage discounts ― a non-sorted mail piece costs 27 cents to mail, whilst machinable mail sorted to five-digit zip order and inducted at the destination SCF (Sectional Control Facility) costs 16.4 cents per piece. For a direct mail marketing campaign consisting of 1 million pieces, the difference in postage is $106,000, a significant amount of money in light of the fact that for most direct mail marketers postage is the single largest cost component in the campaign.

A disadvantage of the prior art is that direct mail marketers have a limited ability to determine when prospects receive a mail piece and direct mail marketers are unable to measure the elapsed time between when the prospect receives the mail piece and when the prospect acts on the offer. The time may be anywhere from immediately to some days later. Thus, the marketers have difficulty staffing call centers and processing orders. Hence, more people may be hired when they are not needed, or there are not enough people to handle all the orders and, consequently, business is lost.

Another disadvantage of the prior art is that when direct mail marketers use mail piece tracking they typically do not have sufficient time to schedule a contact strategy for prospects receiving mail pieces

A further disadvantage of the prior art is that if direct mail marketers used only tracking they would have to track 100% of the mail in order to know when each prospect received the mail piece.

Marketing campaigns today are implemented using a variety of different channels, such as direct mail, telephone, email, television, and radio. While certain campaigns may focus more on one channel than another, campaigns in general will still use more than one channel in order to maximize campaign results. When using more than one channel, each tends to be viewed as separate from the other, and not in the context of all channels used. Isolating each and not understanding the connections between channels can lead to an overload effect with marketing recipients, where they encounter a campaign in multiple forms all at once, potentially discouraging them from responding to the campaign. Additionally, marketing investment is not well leveraged, since channels do not build on each other. For example, instead of using a direct mailing preceded by a telemarketing call (or the reverse), the customer is hit all at once when only one channel was needed to communicate the message. The process of marketing between channels is viewed as trying to utilize each as much as possible irrespective of timing, and without a clear plan between them. Increased costs result from the inability to coordinate and the resulting waste, and revenues decrease with customers overloaded by the number of ways that a message was delivered concurrently.

According to a first aspect of the invention, there is provided computer data processing apparatus for calculating a plurality of dates, the apparatus comprising: a first recipient database for storing data defining candidates for an offer of a product or service by a mail marketing channel; a second recipient database for storing data defining candidates for an offer of a product or service by a further marketing channel; a recipient response database for storing historical response results for previous campaigns; a recipient selector operable to select candidates that are common to the first and second recipient databases; an arrival time window calculator operable to calculate the arrival time window for delivering mail to candidates; and a contact date calculator connected to the window calculator and the recipient response database and operable to calculate contact dates on which the selected candidates should be contacted using the further marketing channel, based on the calculated arrival time windows and historical response results.

According to a second aspect of the invention, there is provided computer data processing apparatus for calculating a plurality of dates, the apparatus comprising: a first recipient database for storing dates defining candidates for an offer of a product or service by a mail marketing channel; a second recipient database for storing data defining candidates for an offer of a product or service by a further marketing channel; a recipient selector operable to select candidates that are common to the first and second recipient databases; a candidate recipient database for storing data relating to candidate recipients; a marketing channel contact date scheduler operable to schedule contact dates for contacting the selected candidates by the further marketing channel on the basis of said candidate recipient data; a recipient response database for storing historical response results for previous campaigns; a delivery date calculator operable to calculate delivery dates on which the selected candidates should receive mail by said mail marketing channel on the basis of said historical response data and the scheduled contact dates; and a dispatch date calculator operable to calculate dispatch dates for dispatching mail to the selected recipients using the mail marketing channel on the basis of said calculated delivery dates.

According to a third aspect of the invention, there is provided a method utilizing a computer for coordinating the date a recipient receives a mail piece containing a offer for a product or service with other marketing channels offering the product or the service, said method comprising the steps of: a) utilizing the composition of a mailing campaign that contains a plurality of mailing shipments that contain a plurality of containers containing a plurality of the mail pieces; b) determining an optimal contact date for contacting the recipient based on a probability that the recipient will receive the mail piece on a given date; and c) contacting the recipient using one or more of the other marketing channels on the optimal contact date so that that the recipient is most likely to accept the offer for the product or the service.

For a better understanding of the invention and to show how the same may be carried into effect, reference will now be made, by way of example, to the accompanying drawings, in which:
FIG. 1 is a flow chart of the direct marketing channel coordination process using mail prediction;
FIG. 2 is a flow chart of the direct marketing channel coordination process using mail control;
FIG. 3 is a flow chart of a direct marketing channel coordination process for contacting prospects using multiple channels;
FIG. 4a is a flow chart of a process controlling a mailing campaign;
FIG. 4b is a flow chart of an algorithm for controlling the mail;
FIG. 5 is a flow chart showing how to predict recipient delivery distribution for a mailing;
FIG. 6 is a flow chart that generates the actual mail shipment induction date and triggers a prediction up-date;
FIG. 7 is a flow chart that loads facility conditions and status information and triggers prediction updates if changes are detected;
FIG. 8 is a flow chart showing how to determine the best shipment induction date as used by the algorithm in Fig. 4b;
FIG. 9 is a block schematic diagram of computer data processing apparatus according to a first embodiment of the invention;
FIG. 10 is a block schematic diagram of computer processing apparatus according to a second embodiment of the invention;
FIG. 11 is a block schematic diagram of computer processing apparatus according to a third embodiment of the invention;
FIG. 12 is a drawing showing how mail is transferred from a major mailer and processed in the entry office of a carrier;
FIG. 13 is a drawing showing how mail is processed from the entry office of a carrier to the recipient;
FIG. 14 is a drawing showing the major mailer of Fig. 12 in greater detail; and
FIG. 15 is a drawing of a mailpiece having a radio frequency identification tag inserted into the mailpiece.

### Detailed Description Of The Drawings

This system overcomes the disadvantages of the prior art by creating a coordinated direct marketing contact strategy between the direct mailing and the other marketing channels. The system determines the marketing prospect names that are common between the direct mailing and the other marketing channels being used in the direct marketing campaign. Then, using mail prediction with the names common between marketing channels, the system determines the probability of the prospect receiving the mail piece on a certain date or dates. For each common name the method calculates the contact date(s) for the other contact channels based on the marketer's contact strategy and the predicted in-home dates. The system then aggregates the individual contact strategies into an overall contact strategy which enables other channels to coordinate with the direct mailing. This process is repeated over several campaigns to benchmark campaign performance that can then be used to analyze and refine future campaign execution.

This system overcomes the disadvantages of the prior art by: determining a coordinated contact strategy, determining the prospect names that are common between direct mail and the other marketing channels; determining the date(s) with probability distribution of in-homing on each date for each common prospect to be marketed to using mail prediction; calculating contact dates for other channels using mail prediction and coordinated contact strategy; contacting using other channel(s) based upon calculated contact dates; optionally removing names that have responded; revising contact strategy based on measures establishing shipment tracking and optimal contact period and channel grouping.

An advantage of the system is that by knowing, for each prospect, the in home date(s) probability distribution for each date the marketer can coordinate the other channel(s) contact strategy to happen before, during or after the mail piece arrives at the prospect. This significantly increases the ways a contact strategy can be created.

A further advantage of the system is that the mail pieces do not have to be individually tracked. The mail pieces may be partially tracked or they may not be tracked at all.

This system may be used by marketers by sending a mail piece to a potential customer and then since the marketer knows when the mail piece is received by the customer, the marketer may contact the customer by telephone, e-mail, interactive television, television, radio, etc.

In an alternate embodiment of this invention, the system determines the induction date required for a mail piece to arrive in home on a specific date or window of dates. It can also be used to coordinate direct mail given an existing strategy for other marketing means. The system determines the marketing prospect names that are common between the direct mailing and the other marketing channels being used in the direct marketing campaign. Given the optimal date or window of dates for mail to arrive in home the method uses mail control to control the in home dates accordingly. Then using mail prediction with the common names between marketing channels the system determines the probability of the prospect receiving the mail piece on a certain date or dates. Thereafter the process continues as described above.

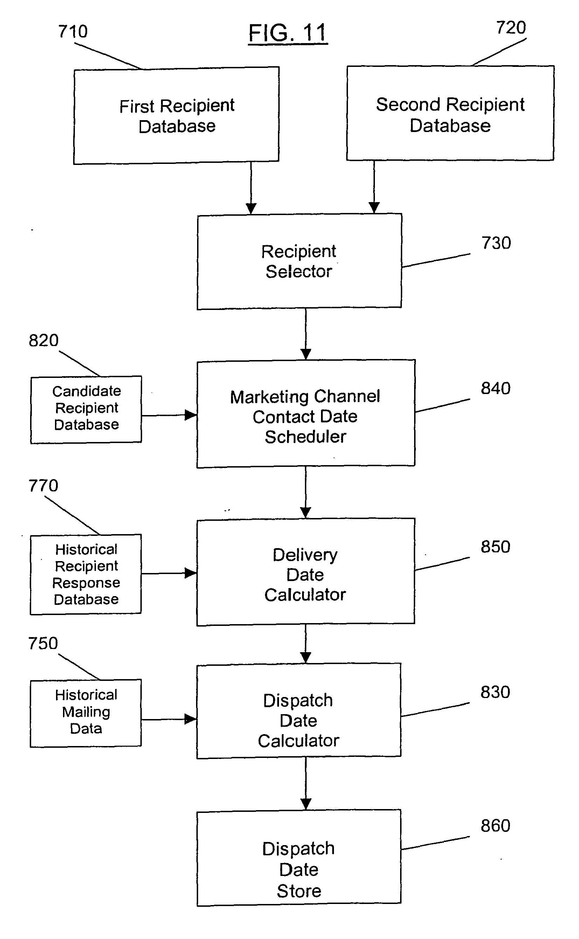

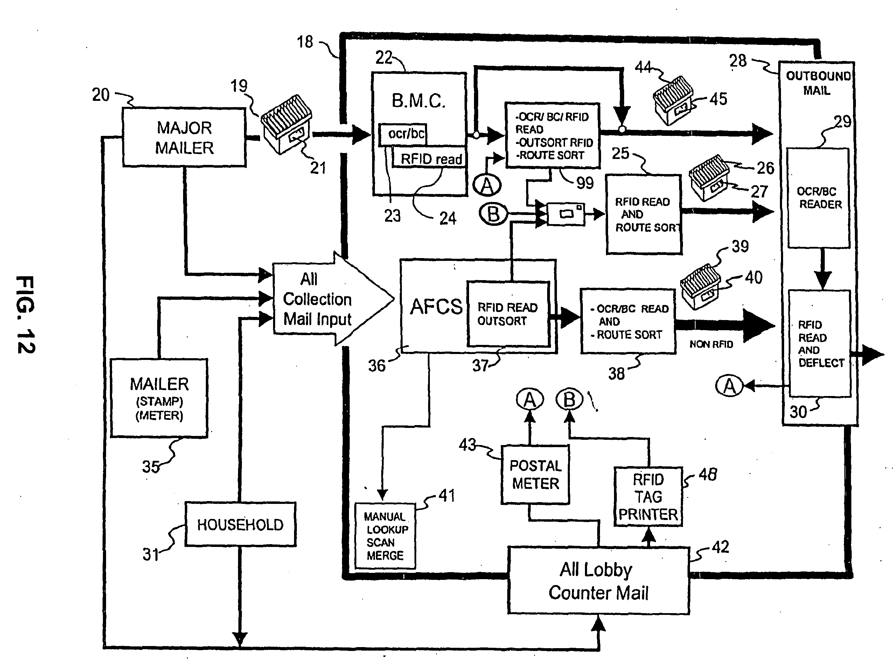

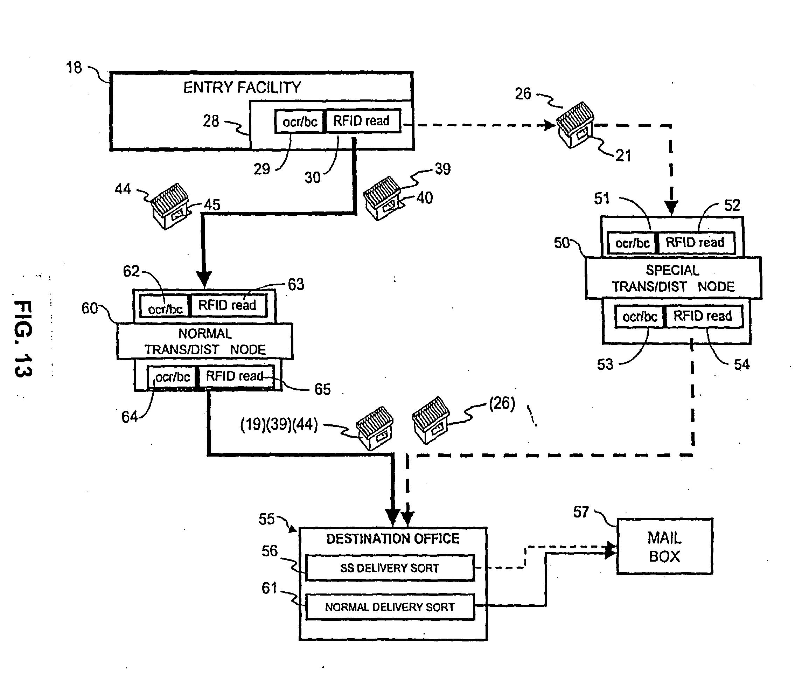

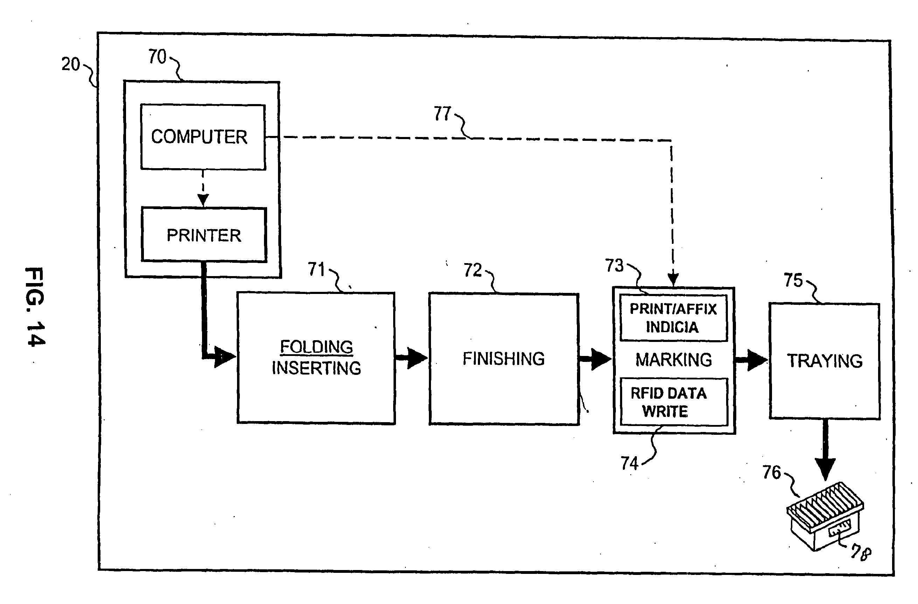

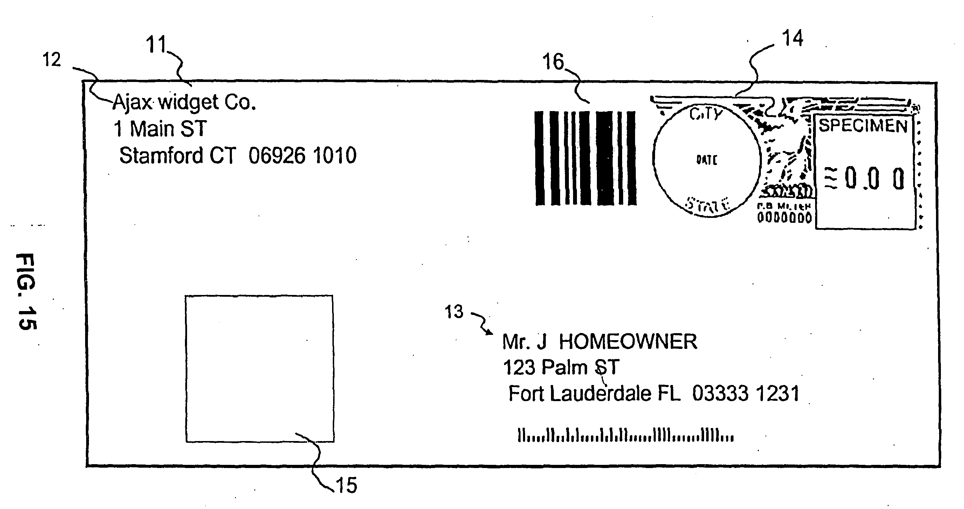

Figure 12 is a drawing showing how mail is processed in the entry office 18 of a carrier. Letter mail 11, such as shown in Fig. 15, may be provided with a radio frequency identification tag 15, in addition to postage indicia 14. Letter mail 11 is deposited in tray 19 by a major mailer 20. A bar code 21 is provided on the outside of tray 19. Major mailer 20 will be described in the description of Fig. 14. Bar code 21 indicates the destination of tray 19. Tray 19 is delivered to bulk mail center 22 of office 18. Optical character/bar code reader 23 reads the information contained in bar code 21, and radio frequency identification reader 24 reads the information contained in tag 15. Tray 19 may contain only special service mail with tags 15, or special service mail with tags 15 and normal mail, or only normal mail. Mail that contains a tag 15 will be placed in a tray 44 that has a bar code 45 that is going to the same destination office as tray 44. Tray 44 will pass through outbound exit 28 of entry office 18 as the delivery process of tray 44 proceeds. Outbound exit 28 contains optical readers 29 that read bar code 45 and radio frequency identification readers 30 that read any tag 15 that may be present. If mail containing a tag 15 is detected in a tray 44, that mail is sent back to the input of RFID/Sorter 25 if it is not going to the same destination office as tray 44.

Radio frequency identification (RFID) reader 24 may be the model SL EV900 reader manufactured by Philips Semiconductors of 1109 McKay Drive, San Jose, Calif. 95131. Some mail containing a tag 15 will go to RFID/Sorter 25 where the mail will be placed in a tray 26 that has a bar code 27 on the outside of tray 26. Bar code 27 indicates the destination office of tray 26. Only mail that has a tag 15 affixed thereto is contained in tray 26. Tray 26 contains mail with tags 15 affixed thereto that will pass through outbound exit 28 of entry office 18 as the delivery process of tray 26 proceeds. Outbound exit 28 contains optical readers 29 that read bar code 27 and radio frequency identification readers 30 that read tags 15. If mail containing a tag 15 does not go to the destination indicated by bar code 27, that mail is sent back to the input of reader 99 so that it may be placed in a special service mail tray that is going to the correct destination office.

Collection letter mail may be metered letter mail that is produced at a mailer site 35 that is able to place postal indicia 14 on mail 11 (see Fig. 15) with a postage meter (not shown) and a tag 15 on the mail with a radio frequency identification label printer (not shown), or stamped mail or metered mail. Collection mail may also be mail that is received from a household 31. Collection letter mail is sent to advanced facer canceller (hereinafter "AFCS") 36. AFCS 36 contains a radio frequency identification reader 37 that reads tags 15.

AFCS 36 faces the letter mail, and then AFCS 36 electronically identifies and separates prebarcoded mail, hand-written addresses and machine-imprinted address pieces for faster processing through automation. Letter mail that AFCS 36 determines is optical character readable is sent to OCR read and sort 38. Read and sort 38 reads the entire address on the mail, sprays a bar code on the mail if needed; and then sorts the mail. The mail is then placed in a tray 39 that has a bar code 40 on the outside of tray 39. Bar code 40 indicates the destination of tray 39 and other information about the contents of tray 39. Only mail that does not have a tag 15 affixed thereto should be contained in tray 39. Tray 39 will pass through outbound exit 28 of entry office 18 as the delivery process of tray 39 proceeds. Outbound exit 28 contains optical readers 29 that read bar code 40 and radio frequency identification readers 30 that read any tag 15 that may be present. If mail containing a tag 15 not for the destination office is detected in a tray 39, that mail is sent back to the input of reader 99 so that it may be placed in a tray that is going to the correct destination office. Letter mail that AFCS 36 determines is not optical character readable is sent to manual look up scan and merge 41 where the mail is manually processed. Radio frequency identification reader 37 reads tags 15 and sends the mail containing a tag 15 to RFID/Sorter 25.

Mail that is produced at household 31 and other mail may be brought directly to the carrier at lobby counter 42. The mailer will pay the carrier the necessary amount to deliver the mail in accordance with the delivery service requested. Postal meter 43 and/or RFID tag printer 48 will print postal indicia on normal mail, i.e., first class mail, standard A mail and standard B mail, and postal indicia with a radio frequency identification tag on special service mail, i.e. priority mail, certified mail, registered mail, express mail, etc. Postal meter 43 will place postal indicia on normal mail, i.e., first class mail, standard A mail and standard B mail. Mail that just contains postal indicia will be sent to the input of optical character reader 99. RFID tag printer 48 will print a tag 15 (Fig. 15) on special service mail, i.e. priority mail, certified mail, registered mail, etc., and meter 43 will print a postal indicia 14 on special service mail. Printer 48 may be the Zebra model R140 manufactured by Zebra Technologies Corporation of 333 Corporate Woods Parkway, Vernon Hills, III. 60061-3109. Special service mail will be sent to the input of RFID/Sorter 25.

Figure 13 is a drawing showing how mail is processed from entry office 18 of a carrier to the recipient. At outbound mail exit 28, optical scanners 29 read the information contained in bar codes 21, 27, 40 and 45 that are respectively affixed to trays 19, 26, 39 and 44 and radio frequency identification readers 30 read any tag 15 that may be present in a tray or tub that bar codes 21, 27, 40 and 45 are affixed to.

All mail in tray 26 that has a tag 15 and is going to the destination specified in bar code 27 will be sent to special transport distribution node 50. Optical scanner 51 and RFID scanner 52, respectively, will read code 27 that is affixed to tray 26 and tags 15 as they enter special distribution node 50, and optical scanner 53 and RFID scanner 54, respectively, will read code 27 and tags 15 as tray 26 exits distribution node 50. The aforementioned scanners verify that no mailpiece containing a tag 15 has been removed from tray 26. Tray 26 containing mail having tags 15 affixed thereto will be delivered to destination carrier office 55.

At this point, RFID sorter 56 will sort the mail contained in tray 26. Then, the mail will be delivered to the recipient by being deposited in mail box 57. The mail may also be delivered directly to the recipient or to a representative of the recipient based upon the special services requested by the sender.

Trays 19, 39 and 44 will be delivered to standard transportation distribution node 60. Then trays 19, 39 and 44 will be delivered to destination carrier office 55. Sorter 61 will sort the mail contained in trays 19, 39 and 44. Then, the mail will be delivered to the recipient by being deposited in mail box 57. The mail may also be delivered directly to the recipient or to a representative of the recipient based upon the special services requested.

Figure 14 is a drawing showing major mailer 20 of Fig. 12 in greater detail. Computer/printer 70 produces documents that are going to be inserted into mailpiece 11. The mailpieces have been presorted by zip code for output traying 75. The documents printed by computer/printer 70 are folded and inserted into mailpieces 11 (Fig. 15) by folding/inserting 71. Finishing 72 places sender and recipient addresses on mailpieces 11. Then finishing 72 seals mailpieces 11. Computer/printer 70 sends information via path 77 about mailpiece 11 so that print/affix indicia 73 and RFID data write 74 may write the correct information into tag 15 and indicia 14. Print/affix indicia 73 affixes a postal indicia 14 having the correct postage to mailpiece 11. RFID data write 74 writes the information hereinbefore described into tag 15. Mailpieces 11 now are placed in tray 76 by traying 75 which adds a tray label 78 to tray 76.

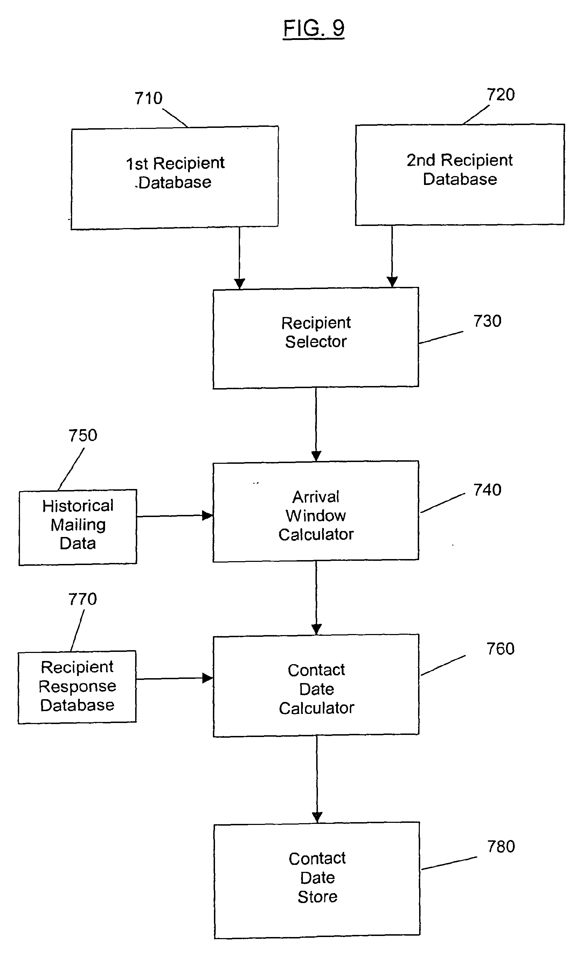

A first embodiment of the present invention will now be described with reference to Fig. 9 which shows computer processing apparatus for calculating a plurality of dates on which a prospective customer should be contact by means of a marketing channel.

Block 710 represents a database of candidate recipients for a mailing campaign, whereas block 720 represents a second database for containing candidate recipients for a further marketing channel such as telephone marketing, e-mail marketing, interactive television advertising, television advertising, radio advertising, etc. A selector unit 730 is arranged to select a list of candidate recipients which are common to the first recipient database 710 and the second recipient database 720. The candidate recipients are then provided to an arrival window calculator 740 which is also supplied with historical mailing data from an historical mailing data store 750. On the basis of the selected recipients and the historical mailing data, the calculator 740 then calculates an arrival time window for each mailpiece or tray of mailpieces in the mailing campaign, taking into account the geographical location of the selected recipients. The arrival time window may include a plurality of dates with differing probabilities assigned to the various dates according to a probability distribution, such as a Gaussian distribution. The arrival time window data is then supplied to a contact date calculator 760, which is also supplied with historical recipient response data from a recipient response database 770. On the basis of the arrival time window data and the recipient response data, the contact date calculator then proceeds to calculate the desired contact dates for the further marketing channel to contact the candidate recipients. A list of the intended recipients together with the calculated contact dates are then stored in a contact date store 780.

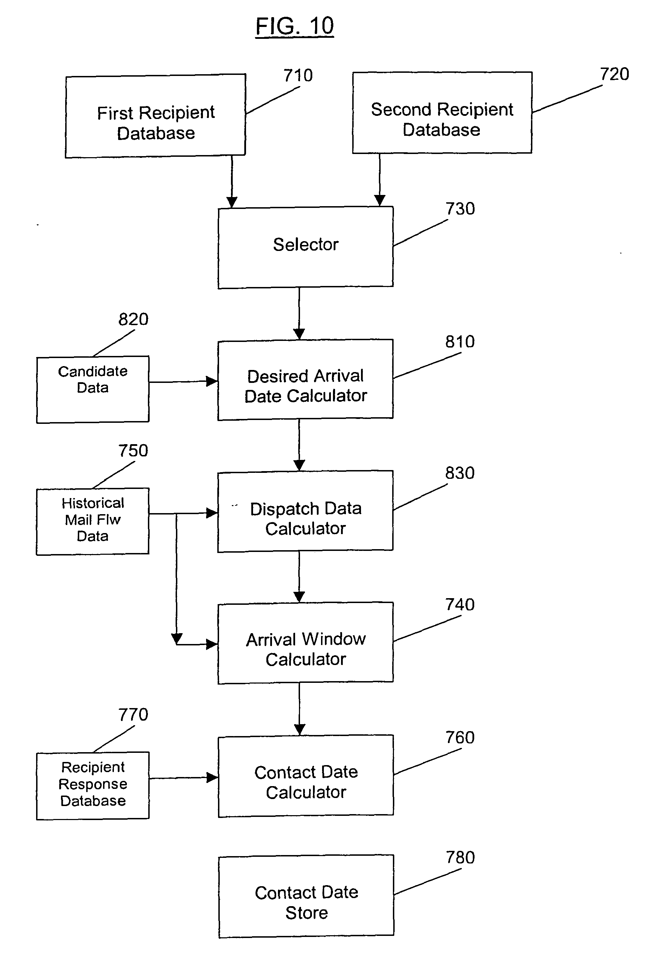

In the embodiment of Fig. 9, no attempt is made to control the arrival time window of the mailing campaign. Rather, the technique proceeds on the basis that the mailing campaign is already established and that the further marketing campaign along a further marketing channel should be coordinated with the mailing campaign. However, in a more sophisticated technique, it is also possible to control the arrival date of the mail items in accordance with stored data relating to the candidate recipients. Such apparatus is illustrated in Fig. 10.

As in the embodiment of Fig. 9, the apparatus of Fig. 10 includes a first recipient database 710 containing data relating to candidate recipients for a mailing campaign and a second recipient database 720 containing candidate recipients for a further mailing campaign along a further marketing channel. A selector 730 selects recipients which are common to the first recipient database 710 and the second recipient database 720. The common candidate recipient data is then supplied to a desired arrival date calculator 810, which is also supplied, from a database 820, with candidate recipient data relating to the optimum day of the week, time of the month, or other time related data for particular candidate recipients. On the basis of this information, the calculator 810 is then able to calculate a desired arrival date for the mailing campaign. The desired arrival dates are supplied to a dispatch date calculator 830 also supplied with historical mail flow data from a database 750. A dispatch date calculator is thus able to calculate the optimum dispatch date for each mailpiece in order to arrive at the desired arrival date calculated by the arrival data calculator 810 on the basis of the candidate data. Of course, dispatch of a mailpiece on a particular date does not guarantee arrival on any particular date, but only maximizes the probability of arrival at a particular date. The dispatch date calculator supplies the data representing the dispatch dates to an arrival time window calculator 740 which then calculates the arrival time windows for each tray of mailpieces on the basis of the dispatch dates and the historical mail flow data from the database 750. This will provide a range of dates according to a corresponding probability distribution, such as a Gaussian distribution. On the basis of this arrival window data, and also on the basis of historical recipient response data from a database 770, a contact date calculator 760 is then able to calculate the optimum contact date for each candidate recipient for use by the second or further marketing channel. These optimum contact dates are then stored in a contact date store 780.

In the embodiments of Figs. 9 and 10, the second marketing channel is adapted to the arrival dates of mailpieces sent according to the mailing campaign. However, with the ability to control the arrival date of mail, it is also possible to adapt the mailing campaign to the other marketing channel. Such an embodiment is shown in Fig. 11. Here we have a first database 710 of candidate recipients for the mailing campaign, a second database 720 containing candidate recipients for the further marketing channel and a recipient selector 730 arranged to select candidate recipients which are common to the first and second candidate recipient databases 710 and 720. The selected candidate recipients data is then supplied to a marketing channel contact date scheduler 840, which also receives candidate recipient data from a candidate recipient database 820. On the basis of the candidate recipient data, the marketing channel contact date scheduler 840 schedules optimum dates for the selected recipients according to information known about the habits or geographical locations of the recipients. The scheduled contact dates are then supplied to a delivery date calculator 850, which is also provided with historical recipient response data from an historical recipient response database 770. The delivery date calculator is then able to calculate the optimum delivery dates for the mailing campaign to coordinate effectively with the contact dates scheduled for the other marketing channel according to the output of the marketing channel contact date scheduler 840. On the basis of the calculated delivery dates, a dispatch date calculator 830 then calculates the optimum dispatch dates taking into account historical mailing data from an historical mailing data database 750. The calculated dispatch dates are then stored in a dispatch date store 860. This enables the arrival dates of the mail items forming part of the mailing campaign to be coordinated effectively with the contact to the candidate recipients according to the other marketing channel. For example, the mailpieces may be scheduled to arrive on the same date as the prospective contact through the other marketing channel or may possibly be scheduled to arrive the following day or the preceding day according to the historical recipient response information taken from the database 770.

In any of the embodiments of Figs. 9, 10 and 11, the various functional apparatus blocks may be implemented by software modules stored in a ROM or other program store and run on a suitable computer, such as a microprocessor. One suitable computer is the computer 70 at the mailer's facility 20 shown in Fig. 14. Alternatively, the various functional blocks may be implemented by dedicated electronic units, such as ASICs (Application Specific Integrated Circuits).

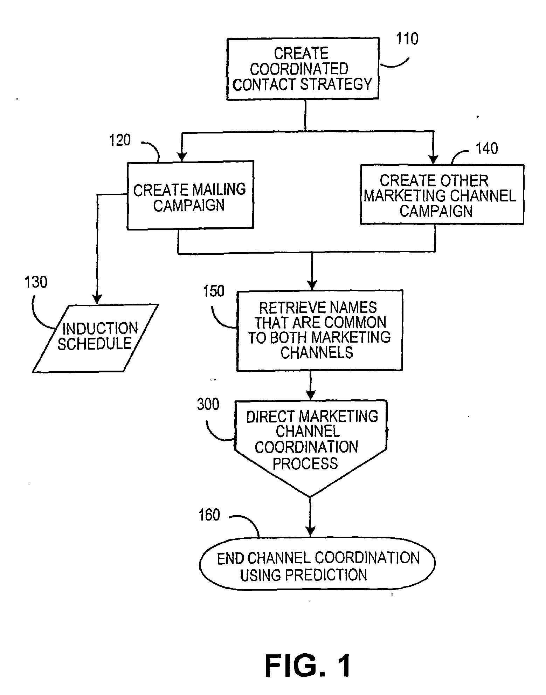

A direct marketing channel coordination process using the apparatus of Fig. 9 is described with reference to Fig. 1. The process starts in Step 110, Create Coordinated Contact Strategy, where a shipper, such as major mailer 20 of Fig. 14, selects the prospects to contact and the strategy for contacting them is determined based on demographics, historical results, etc. The process continues in step 120, Create Mailing Campaign, where the mail for the mailing campaign is produced, and prepared to be delivered by the shipper to the carrier such as the carrier shown in Fig. 12. Once the shipper has processed the mailing campaign, the Induction Schedule, as indicated in Step 130, is produced by the shipper that indicates when individual shipments within the Mailing Campaign will be inducted by the carrier. At the same time, the other marketing channel campaign being coordinated is created and prepared for execution, as indicated in Step 140.

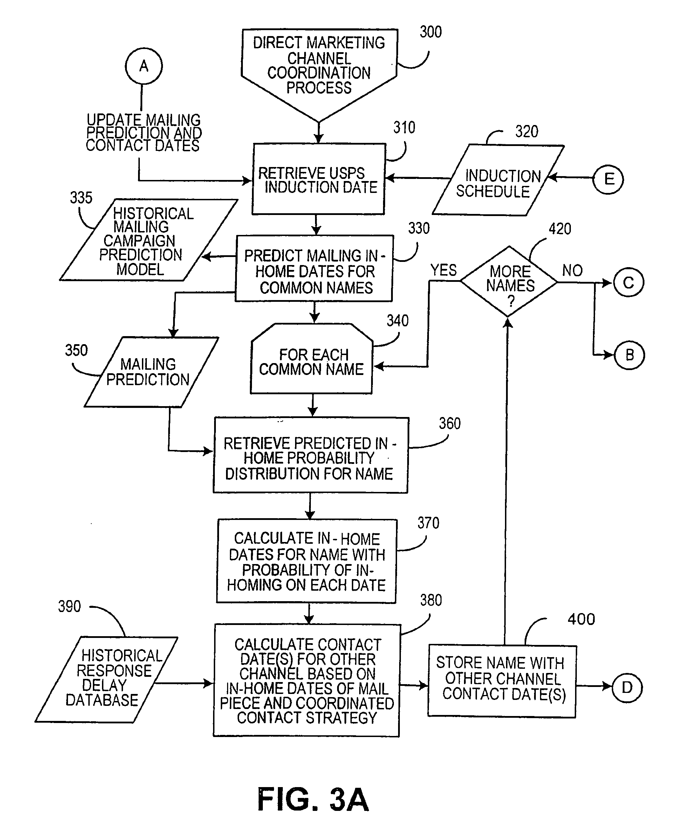

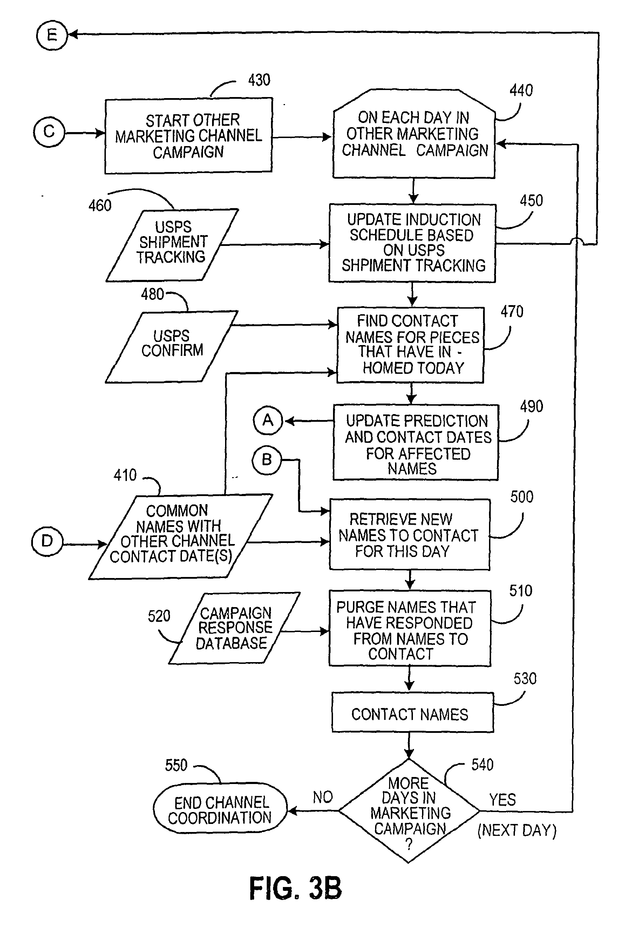

The process continues with Step 150, Retrieve Names that are Common to both Marketing Channels, where a list is prepared of the recipient names that are common between the Mailing Campaign and the Other Marketing Channel Campaign. Once the list is prepared, the process continues in Step 300, Direct Marketing Channel Coordination Process (Fig 3). Once the Direct Marketing Channel Coordination Process completes, the process finishes in Step 160, End Channel Coordination using Mail Prediction.

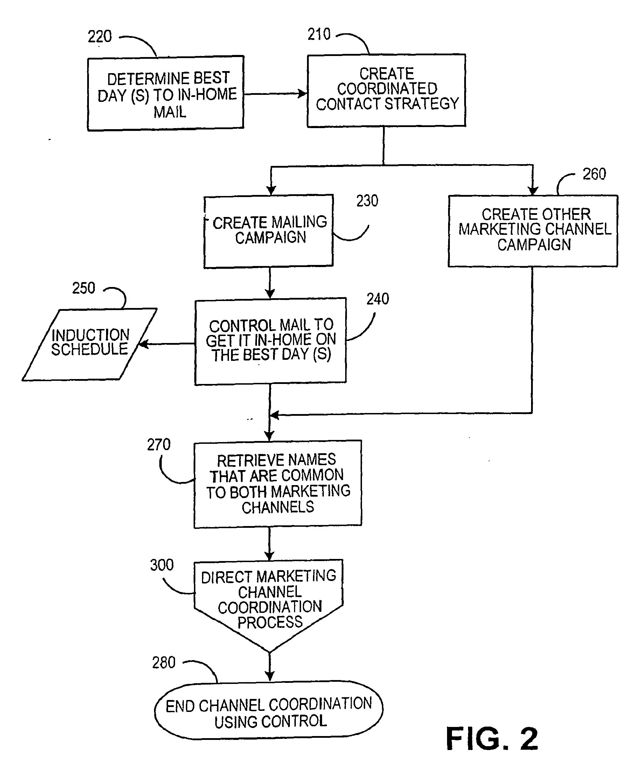

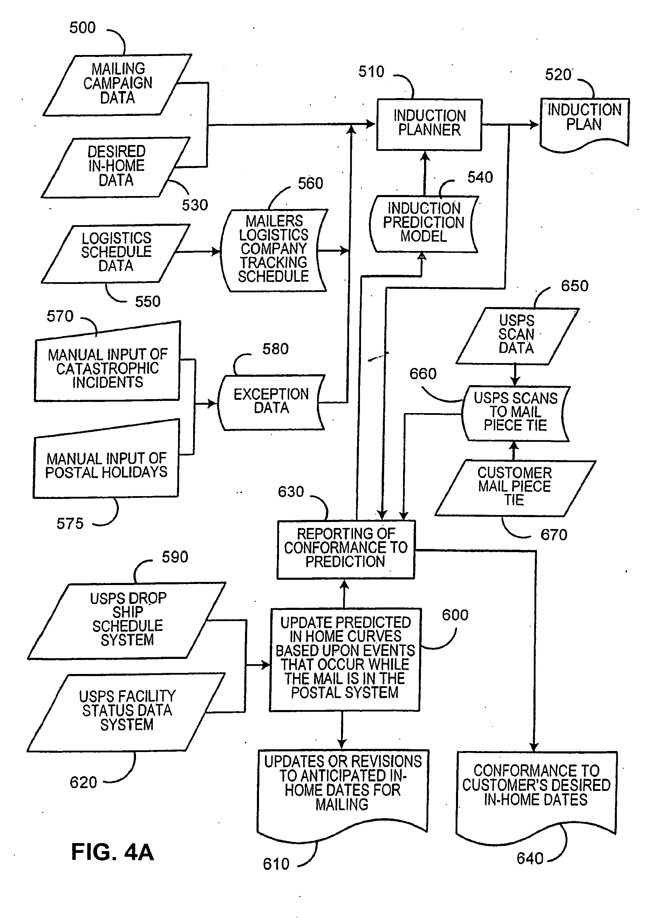

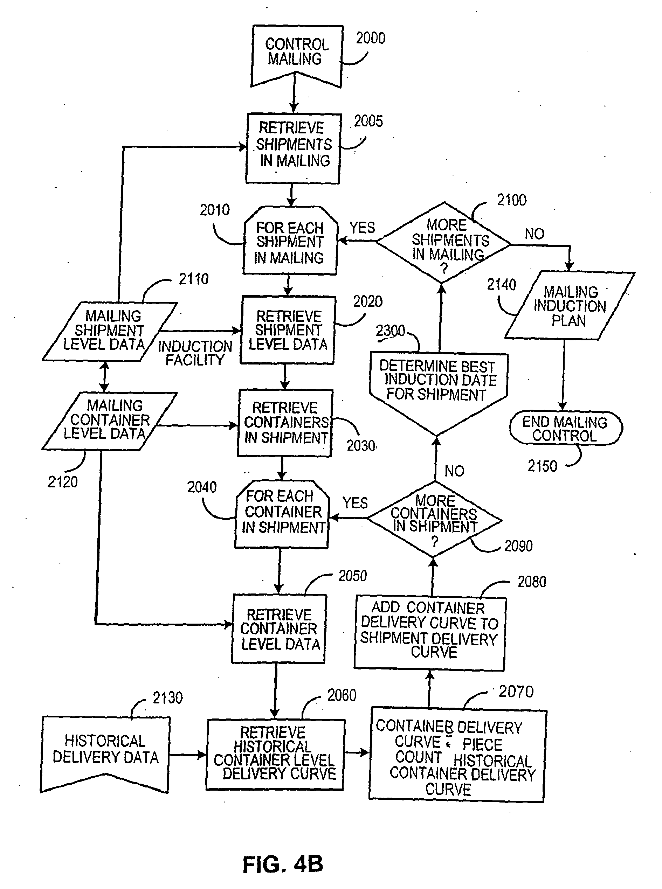

Fig. 2 is a flow chart of the direct marketing channel coordination process using mail control, using the apparatus of Fig. 10. The process starts in Step 210, Create Coordinated Contact Strategy. The prospects to contact are selected by the mailer, such as major mailer 20 of Fig. 14, and the strategy for contacting them is determined based on demographics, historical results, etc. In addition, Step 220 provides information for the best days to have the mail delivered to the recipient (at their home or office), based on historical campaign performance results, demographics, and campaign requirements. The process continues in step 230, Create Mailing Campaign, where the mail for the mailing campaign is produced, and prepared to be delivered to the Carrier, such as the carrier of Fig. 12. Then, in Step 240, the Mailing Campaign is controlled to have the mail delivered to recipients in the best days, as specified earlier. Step 240 is more fully described hereinafter in the flow-charts of Figs. 4A and 4B. Then an Induction Schedule is produced, as indicated in Step 250 that indicates when individual shipments within the Mailing Campaign will be inducted by the Carrier. With the Induction Schedule, the Shipper will proceed to deliver the mail to the Carrier facilities on the scheduled dates.

At the same time, the other marketing channel campaign being coordinated is created and prepared for execution, as indicated in Step 260.

The process continues with Step 270, Retrieve Names that are Common to both Marketing Channels, where a list is prepared of the recipient names that are common between the Mailing Campaign and the Other Marketing Channel Campaign. Once the list is prepared, the process continues in Step 300, Direct Marketing Channel Coordination Process (Fig 3). Once the Direct Marketing Channel Coordination Process completes, the process finishes in Step 280, End Channel Coordination using Mail Control.

Fig. 3 is a flow chart of a direct marketing channel coordination process for contacting prospects using multiple channels. The process starts in Step 300, Direct Marketing Channel Coordination Process and is followed by Step 310, Retrieve USPS Induction Date, where the induction dates are retrieved for each shipment from the Induction Schedule in Step 320. If the Induction Schedule has been updated, then an updated induction date is retrieved.

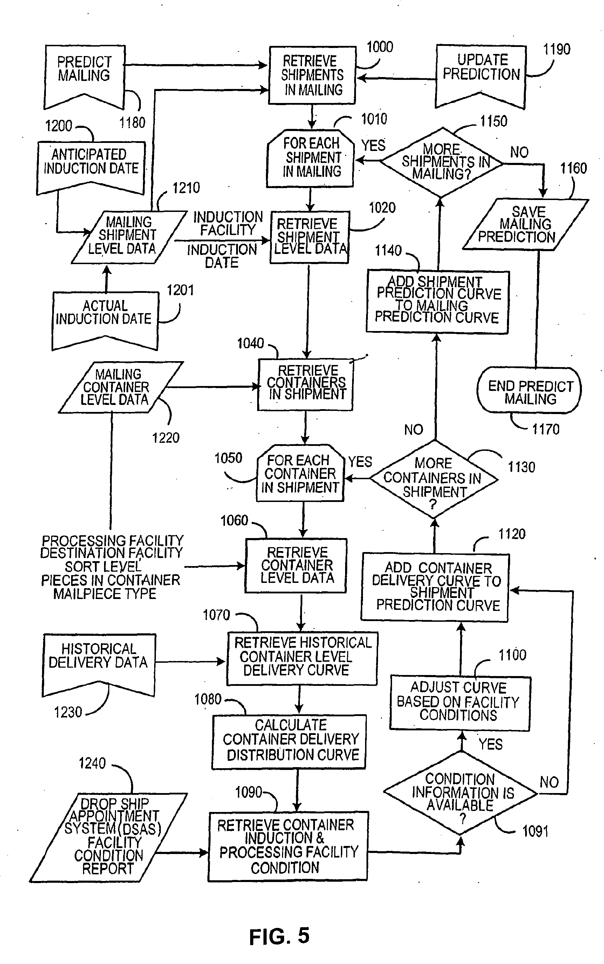

Then in Step 330, Predict Mailing In-Home Dates for Common Names, where prediction curves are generated for the mailing campaign, for each shipment in the mailing campaign, and for each container in each shipment, with the probability of how much mail will be delivered to the recipients on each day in the campaign. Steps 330, 335 and 350 are more fully described in Fig. 5 hereinafter. A Historical Mailing Campaign Prediction Model, as indicated in Step 335, is used to create the prediction curves. The prediction curves are stored in the Mailing Prediction in Step 350, and then in Step 340, each one of the Common Names is retrieved in order to calculate the best Contact Date for that name. Then in Step 360, the In-Home probability prediction curve is retrieved for the mail container associated with the Contact Name from the Mailing Prediction in Step 350. The process proceeds to Step 370, where the container (or Common Name) prediction curve is translated into a list of in-home dates, each with the associated probability of in homing on that date. Then, in Step 380, the Contact Date for the Common Name is calculated based on the in-home date probabilities, Historical Response Delays shown in Step 390, and the Contact Strategy that was created earlier in the process. Then in Step 400, the Common Name and associated Contact Date(s) are stored in the Common Names and other channel Contact Dates Database as shown in Step 410. The process continues in Step 420 where it is determined if more Common Names need to be processed. If more Common Names need to be processed, the process continues with Step 340, otherwise, the process continues with Step 430.

Step 430, Start Other Marketing Channel Campaign, initiates the other marketing channel campaign by allocating, preparing and scheduling the necessary resources for the campaign. The process continues in Step 440, which is performed at the start of each day of the Other Marketing Channel Campaign. Then, in Step 450, the induction schedule for the Mailing Campaign is updated according to USPS Shipment Tracking, as indicated in Step 460. If a shipment's induction date was changed from the original induction schedule, then the induction schedule shown in Step 320 is updated. Then if mailpiece tracking is enabled, the process continues with Step 470, where the contact names are retrieved for mailpieces that have been delivered to recipients. Then in Step 490, the Mailing Prediction and Contact Dates are updated for Contact Names that were affected by changes to the induction schedule and/or in-home/office date for mailpieces. The process continues with label A, and proceeds with Steps 310 through 420, as hereinbefore described, for the Contact Names affected by the updated induction schedule or mailpiece in-home/office dates. When all corresponding Contact Dates have been updated, the process returns through label B to Step 500, where the Names to contact for the current day in the Other Marketing Channel Campaign are retrieved from the Common Names with Other Channel Contact Dates database, as shown in Step 410.

Once a list of Names to Contact is created for the current day, the process continues with Step 510, where the recipients who have responded to the offer or service are retrieved from the Campaign Response Database as shown in Step 520, and are removed from the list of Names to Contact, if possible. Then in Step 530, the recipients to contact are contacted via the appropriate means, as specified by the Marketing Channel for the Other Marketing Channel Campaign. Then in step 540, if more days are still left in the Other Marketing Channel Campaign, then the process continues with Step 440. If there are no more days left in the Other Marketing Channel Campaign, the process ends in Step 550, End Channel Coordination.

Fig. 4A is a flow chart of the Process for controlling a mailing campaign. In FIG. 4A, the customer provides mailing campaign data file in step 500 describing the mail pieces in each shipment of the mailing campaign. A mailing campaign consists of one or more shipments. Each shipment consists of a number of trays or containers of mail sorted to some density for instance 3-digit zip code level, 5-digit zip code level, or AADC level. Further, each shipment is to be inducted at a specific BMC of Sectional Control Facility (SCF). Each tray or container consists of one or more mail pieces. Of those mail pieces, one or more mail piece in each tray are uniquely identified with a bar code or bar codes uniquely identifying that mail piece. Those bar codes are in a format that is scanned and stored by the carrier, such as USPS. The mail campaign data include may custom formats such as a comma delimited flat file or an XML formatted data file, or may follow an industry standard such as Mail.dat. The customer also inputs to the system the desired days that the recipient is to receive the mail piece in step 530. The recipient target interval may be specific days of a week or specific dates. For instance, the recipient population is to receive the mail piece on a Tuesday or Wednesday or the recipient is to receive the mail piece on the 13^{th} or 14^{th} of January, 2005. The system shall accept inputs spanning one or more desired in-home days or dates.

The induction planner in step 510 using a model of the processing pattern of all facilities in the system determines the best day of the week to induct the mail at each of the target facilities. Step 510 is described in more detail in Fig. 4B. The system also accepts exception event inputs containing postal holidays in step 575 and in step 570 catastrophic events that may shut down or seriously impede the postal system's ability to process mail. In step 580 the data is stored in an exception data file or database and accessed by the induction planner. Further, the system takes as an input the logistics schedule of the shipping provider for the mailer in step 550 and stores that data in step 560 using a method that allows access by the induction planning software. The logistics schedule of the shipping provider is the route schedule for that transportation firm. The system, is able to plan the induction schedule for the mail around the dates that the logistics provider actually inducts mail with the destination facility or facilities. It is not uncommon for the logistics providers to take mail to some facilities daily and some other facilities as infrequently as once per week.

Given all of the inputs, the system calculates an induction plan in step 510 containing the date to induct the mail for each destination facility within the USPS. Further, the system outputs an anticipated arrival curve for each container or shipment or the mailing campaign as a whole or a part of the campaign. The anticipated arrival curve provides the mailer with a realistic idea for when the mail will arrive with the recipient population given logistics constraints, postal processing variability, postal holidays and catastrophic events.

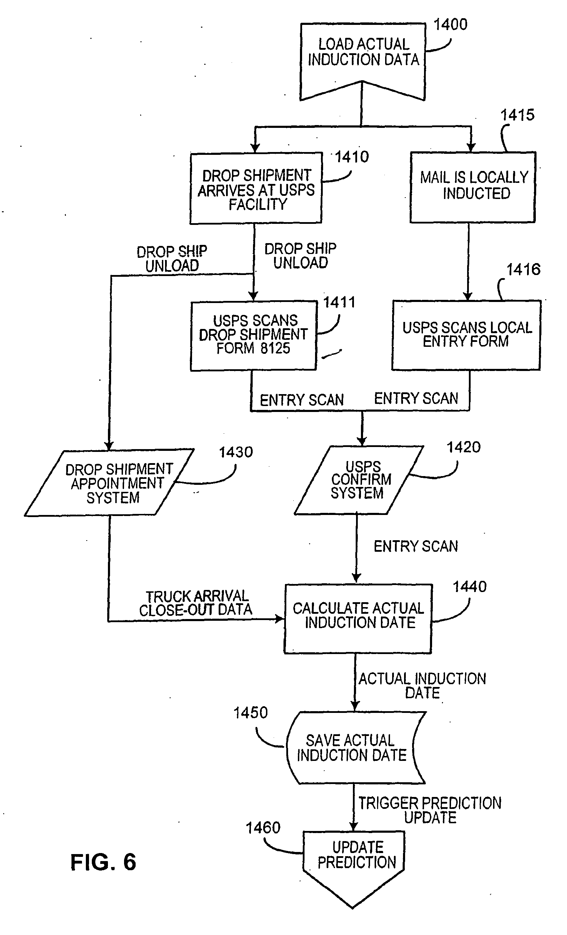

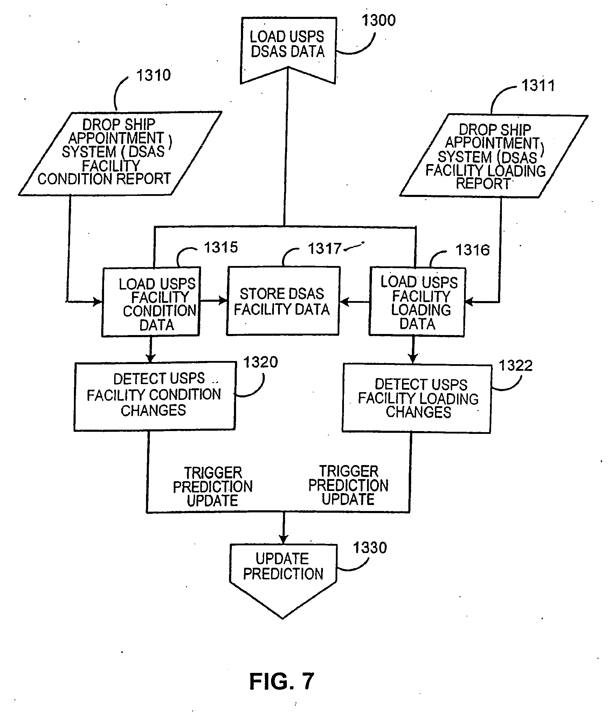

Once the mailer instructs the shipper when to induct the shipments at each destination processing facility the system monitors the USPS system in step 590 to measure when the shipment(s) were actually inducted. Step 590 is described in further detail in Fig. 6 and step 620 in described in further detail in Fig. 7. Additionally, the system monitors the DSAS system in step 620 for facility status information which may delay the processing and ultimately delivery of mail to the recipients of that mail. Periodically, the system accesses the stored induction and facility status data in step 600 and updates the anticipated in-home curves in step 610.

Once the mail is accepted, those pieces containing scannable bar codes are processed and tracked through the USPS. The USPS reports that scan information for each scannable piece. The scanned data in step 650 is downloaded to the system and tied to the customer mail piece data in step 670 through an appropriate database in step 660. The system then uses that data to generate reports containing when the prospect population is in fact receiving the mail pieces. Further that data is used to create conformance reporting back to the mailer in step 640 demonstrating how much mail was in-homed within the desired window.

The delivery results of the mailing campaign including shipment and mail piece information are then used to update the induction planning model in step 540 thus refining the induction planner's in step 510 future capability to accurately determine when mail is to be inducted to achieve desired delivery dates.

Fig. 4B is a flow chart of an algorithm for controlling the mail. The process begins in step 2000 control mailing. Then in step 2005 mailing shipments are retrieved from step 2110. Now in step 2010 each shipment from step 2005 is processed one shipment at a time. Then in step 2020 the data associated with the make up of the shipment from step 2110 is retrieved. The retrieved data includes the induction facility and the mail piece count. In step 2030 the identity of the containers in the shipment are retrieved from step 2120 mailing container level data.

Now in step 2040 each container in the shipment is processed. Then step 2050 the data associated with the make up of the container from step 2120 is retrieved. This data includes the container processing facility, destination facility, sort level, mail pieces in the container and make up of the mail piece. Then in step 2060 the historical level delivery curve associated with the container in step 2050 is retrieved from step 2130 historical delivery data. The historical delivery curve is conveyed as a proportional curve that indicates the percentage of mail pieces delivered each day.

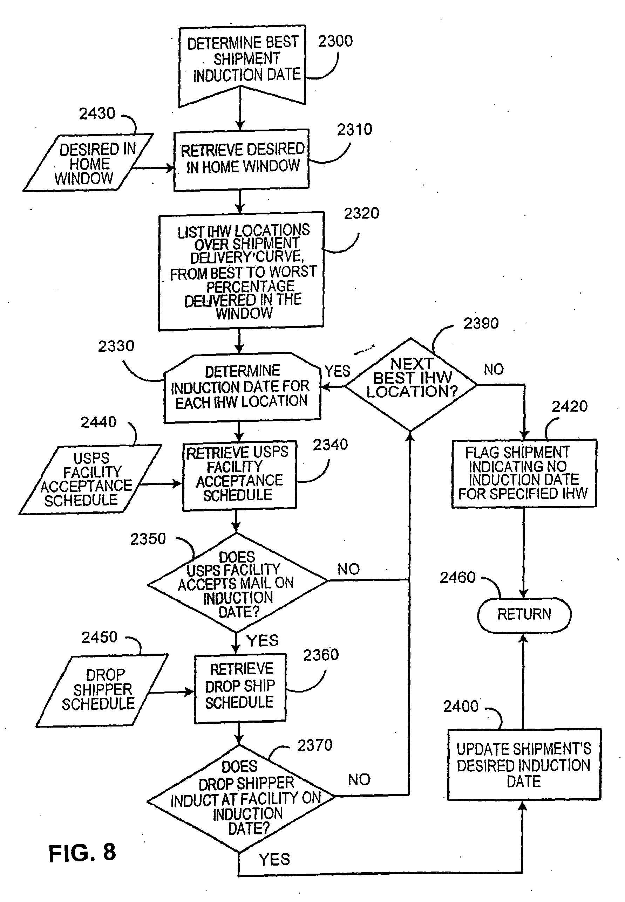

In step 2070 the mail pieces delivered per day for this container is calculated by multiplying the mail piece counts in the container by the historical container delivery curve. Then, step 2080 adds the container delivery curve calculated in step 2070 to the shipment delivery curve. Now step 2090 determines whether or not there are more containers to be processed in the shipment. If step 2090 determines there are more containers in the shipment to be processed, the next step will be step 2040. If step 2090 determines there are no more containers in the shipment to be processed, the next step will be step 2300 to determine the best shipment induction date. Step 2300 is more fully described in the description of Fig. 8.

Then the process goes to step 2100 to determine whether or not there are more shipments in the mailing campaign. If step 2100 determines that there are more shipments in the mailing campaign the next step is step 2010. If step 2100 determines that there are no more shipments in the mailing campaign the next step is step 2140 which prints an induction plan for execution. Now in step 2150 the mailing control algorithm is completed.

Fig. 5 is a flow chart showing how to predict recipient delivery distribution for a mailing. The process begins in step 1180 where the mailing prediction process begins and goes to retrieve shipments in mailing step 1000 or the process may also begin if it is triggered by the update prediction of step 1190. The anticipated induction date of the mailing from step 1200 is used with the retrieve shipment level data in step 1020 and with the mailing container level data from step 1220 by step 1210 to obtain the mailing shipment level data. Step 1020 uses mailing shipment level data from step 1210 including the anticipated induction date in step 1200 and the induction facility to prepare a prediction for a shipment. In step 1040 the containers in the shipment are retrieved.

In step 1050 the process iterates through each container in the shipment and in step 1060 the process retrieves the container level data. Then the process will go to step 1070 to retrieve a historical container level delivery curve from step 1230. Then in step 1080 the container delivery distribution is calculated based upon the historical delivery curve by applying the container piece count for each day in the distribution and using Sundays, holidays and other postal delivery processing exceptions. Then in step 1090 the information from step 1080 and the drop ship appointment facility condition data from step 1240 is utilized to retrieve container induction and processing facility conditions. Step 1091 determines whether or not the information from step 1240 is available. If step 1091 determines the information is available the next step in the process is step 1100 to calculate facility condition offset. If step 1091 determines the information is not available the next step in the process is step 1120.

Then step 1120 adds the container delivery curve to the shipment prediction curve. Then if step 1130 determines that there are no more containers in the shipment, the process goes to step 1140 to add a shipment prediction curve to a mailing prediction curve. If step 1130 determines that there are more containers in the shipment the next step will be step 1050. Now if step 1150 determines that there are no more shipments in the mailing the next step will be step 1160 to save the mailing prediction. If step 1150 determines that there are more shipments in the mailing the next step will be step 1010. Step 1170 ends the predict mailing process.

Fig. 6 is a flow chart that generates the actual mail shipment induction date and triggers the prediction update. The process begins at step 1400 via an automated or user driven request. Two independent events are detected, in step 1410, mail arrives at a USPS facility as a Drop Shipment and in step 1415, mail arrives at a USPS facility for local induction. Step 1411 follows step 1410 where the USPS scans Drop Shipment Form 8125 and produces an Entry Scan. Step 1416 follows step 1415 where the USPS scans Local Entry Form 3602 and also produces an Entry Scan. The Entry Scans are stored in Step 1420 by the USPS Confirm System for later retrieval. In addition, step 1410 is also followed by step 1430, where the Drop Shipment Appointment System stores information associated with the drop shipment, such as the truck arrival, status, load time, etc. Step 1420 and step 1430 are followed by Step 1440, where the Actual Induction Date is calculated using the best possible date from the entry scan or the drop shipment information that is available (If both sets of data are available, the appointment data is used). Then in step 1450 the Actual Induction Date is stored and in step 1460 a trigger is generated to update the mailing campaign prediction.

Fig. 7 is a flow chart that loads facility conditions and status information and triggers prediction updates if changes are detected. The process begins at step 1300, via an automated or user driven request. The facility conditions are then loaded in step 1315 from step 1310 and stored in step 1317. At the same time, Facility Loading data is loaded in step 1316 from step 1311 and stored in step 1317. Step 1320 follows step 1315, where changes to the facility conditions are detected. In a similar fashion, step 1322 follows step 1316 and detects changes to the facility loading data. In either case, if changes are detected, steps 1320 and 1322 will trigger a Prediction Update in step 1330.

Fig. 8 is a flow chart showing how to determine the best shipment induction date as used by the algorithm in Fig. 4B. The process begins at step 2300 determine best shipment induction date. Then in step 2310 data is retrieved for the desired in home window. At this time data is exchanged between step 2310 and step 2430 desired in home window to specify the date range when most of the mail needs to be delivered. Now in step 2320 the process builds a list of all the possible in home window locations over the shipment delivery curve, calculating the percentage of mail delivered inside the window for each window location. The in house window locations are sorted from best to worst, i.e., from most mail delivered to least mail delivered in the window.

In step 2330, the induction date is determined for each in home window location taking into account Sundays and holidays. Then step 2340 retrieves the USPS facility acceptance schedule. Step 2340 exchanges information with step 2440 USPS facility acceptance schedule. At this point the process goes to step 2350. Step 2350 determines whether or not the USPS facility accepts mail on the induction date. If step 2350 determines that mail is accepted on the induction date, the process goes to step 2360 to retrieve the drop ship schedule. Step 2360 exchanges information with step 2450 drop shipper schedule. Then the process goes to step 2370. Step 2370 determines whether or not the drop shipper can deliver the shipment to the induction facility on the induction date. If step 2370 determines that the shipper can deliver the shipment on the induction date the process goes to step 2400 update shipment desired induction date. The next step will be step 2460 return. If step 2370 determines the drop shipper can not deliver the shipment on the induction date or if step 2350 determines that the USPS facility does not accept mail on the induction date then, the next step is 2390.

If decision step 2390, determines that the next highest in home window location does not exist, the process goes to step 2420, where the shipment is flagged as there is no known induction for the specified in home window. Then the process goes to step 2460 return.

It should be understood that although the present invention was described with respect to mail processing by the USPS, the present invention is not so limited and can be utilized in any application in which mail is processed by any carrier. The present invention may also be utilized for mail other than direct marketing mail, for instance, transactional mail, i.e., bills, charitable solicitations, political solicitations, catalogues etc. Also the expression "in-home" refers to the recipient's residence or place of business.

The above specification describes a new and improved method for coordinating the date a recipient receives a mail piece containing a offer for a product or service with other marketing channels offering the product or the service. It is realized that the above description may indicate to those skilled in the art additional ways in which the principles of this invention may be used. Therefore, it is intended that this invention be limited only by the scope of the appended claims.

## Claims

1. Computer data processing apparatus for calculating a plurality of dates, the apparatus comprising:
a first recipient database (714) for storing data defining candidates for an offer of a product or service by a mail marketing channel;
a second recipient database (720) for storing data defining candidates for an offer of a product or service by a further marketing channel;
a recipient response database (770) for storing historical response results for previous campaigns;
a recipient selector (730) operable to select candidates that are common to the first and second recipient databases;
an arrival time window calculator (740) operable to calculate the arrival time windows for delivering mail to said candidates; and
a contact date calculator (760) connected to the arrival time window calculator (740) and the recipient response database (770) and operable to calculate contact dates on which the selected candidates should be contacted using the further marketing channel, based on the calculated arrival time windows and historical response results.

2. Processing apparatus according to Claim 1, wherein a historical mailing delivery database (750) is provided for storing historical mail delivery data for previous deliveries.

3. Processing apparatus according to Claim 2, wherein said arrival time window calculator (740) is arranged to calculate said arrival time window on the basis of recipient address and said historical mail delivery data.

4. Processing apparatus according to any preceding claim wherein said arrival time window calculator (740) is arranged to calculate a probability distribution of arrival times across each window.

5. Processing apparatus according to any preceding claim, further comprising a desired arrival time calculator (810) for calculating desired mail arrival time for the selected candidates.

6. Processing apparatus according to Claim 5, further comprising a candidate recipient database (820) for storing data relating to candidate recipients, and supplying candidate data to said desired arrival time calculator (810).

7. Processing apparatus according to Claim 5 or 6, further comprising a dispatch date calculator (830) for calculating mail dispatch dates on the basis of said desired arrival times.

8. Processing apparatus according to Claim 7, as dependent on Claim 2, wherein said dispatch date calculator (830) is arranged to calculate said mail dispatch dates on the basis of said historical mail delivery data.

9. Computer data processing apparatus for calculating a plurality of dates, the apparatus comprising:
a first recipient database (710) for storing dates defining candidates for an offer of a product or service by a mail marketing channel;
a second recipient database (720) for storing data defining candidates for an offer of a product or service by a further marketing channel;
a recipient selector (730) operable to select candidates that are common to the first and second recipient databases;
a candidate recipient database (820) for storing data relating to candidate recipients;
a marketing channel contact date scheduler (840) operable to schedule contact dates for contacting the selected candidates by the further marketing channel on the basis of said candidate recipient data;
a recipient response database (770) for storing historical response results for previous campaigns;
a delivery date calculator (850) operable to calculate delivery dates on which the selected candidates should receive mail by said mail marketing channel on the basis of said historical response data and the scheduled contact dates; and
a dispatch date calculator (830) operable to calculate dispatch dates for dispatching mail to the selected recipients using the mail marketing channel on the basis of said calculated delivery dates.

10. Processing apparatus according to Claim 9 further comprising a historical mailing delivery database (750) for storing historical mail delivery data for previous deliveries.

11. Processing apparatus according to Claim 10, wherein said dispatch date calculator (830) is operable to calculate said dispatch dates on the basis of said historical mail delivery data.

12. A method utilizing a computer for coordinating the date a recipient receives a mail piece containing a offer for a product or service with other marketing channels offering the product or the service, said method comprising the steps of:
a. utilizing the composition of a mailing campaign that contains a plurality of mailing shipments that contain a plurality of containers (19) containing a plurality of the mailpieces (11);
b. determining an optimal contact date for contacting the recipient based on a probability that the recipient will receive the mail piece on a given date; and
c. contacting the recipient using one or more of the other marketing channels on the optimal contact date so that that the recipient is most likely to accept the offer for the product or the service.

13. The method claimed in Claim 12, further including the step of:
updating the contact dates for the other marketing channels in the case where the recipient does not receive the mail piece on the most probable date.

14. The method claimed in Claim 13, wherein the contact dates are updated based on mail piece tracking information.

15. The method claimed in Claim 14, further including the step of:
scanning the mail piece to determine when the recipient receives the mail piece.

16. The method claimed in Claim 13, wherein the contact dates are updated based on shipment tracking information.

17. The method claimed in Claim 16, further including the step of:
tracking the mail piece shipment to determine when the carrier inducts the shipment containing the mail piece.

18. The method claimed in Claim 13, further including the step of:
updating contact dates for the other marketing channels based on mail piece tracking information and the probability that the recipient will receive the mail piece on a given date.

19. The method claimed in Claim 13, further including the step of:
updating contact dates for the other marketing channels based on mail piece tracking information or the probability that the recipient will receive the mail piece on a given date.

20. The method claimed in Claim 12, wherein the contact dates are determined by using a historical mailing campaign prediction model.

21. The method claimed in Claim 12, further including the step of:
using a mailing campaign historical response delay data base to calculate the recipient contact date.

22. The method claimed in Claim 12, wherein step b, further includes the steps of:
finding the container that has the recipient mail piece; and
using the container in-home probability distribution to determine the probability that the recipient will receive the mail piece on a given date.

23. The method claimed in Claim 12, further including the step of:
aggregating contact strategies for different marketing channels into an overall coordinated contact strategy for a marketing campaign.

24. The method claimed in Claim 12, further including the step of:
refining previous campaign contact strategy by benchmarking previous campaigns and comparing the previous marketing campaign to the marketing campaign.

25. The method claimed in Claim 12, wherein other marketing channels are selected from the group comprising: telemarketing, e-mail, television, interactive television, billboards, interactive billboards and radio.

26. The method claimed in Claim 12, further including the step of:
using statistical analysis to determine the optimal contact strategy.

27. The method claimed in Claim 26, further including the step of:
using historical marketing campaign results to refine the marketing campaign contact strategy.
